# FASCICULE DE BREVET EUROPEEN

(11) **EP 0 728 933 B1**
(45) Date de publication et mention de la délivrance du brevet: **26.05.1999**
(21) Numéro de dépôt: 96400308.1
(22) Date de dépôt: 15.02.1996
(51) Int. Cl.: F02K 1/70

(54) **Inverseur de poussée à portes associées à un panneau aval**
Schubumkehrvorrichtung mit dem Hinterteil verbundenen Klappen
Thrust reverser with doors linked to rear panel

(30) Priorité: 21.02.1995 FR 9501960
(43) Date de publication de la demande: 28.08.1996
(73) Titulaire: Hispano-Suiza Aérostructures, 76700 Gonfreville l'Orcher (FR)
(72) Inventeur: Portal, Jean-Fabrice M., 76310 Sainte Adresse (FR); Vauchel, Guy B., 76610 Le Havre (FR)
(74) Mandataire: Berrou, Paul

(56) Documents cités:
- EP-A- 0 067 747
- EP-A- 0 365 425
- EP-A- 0 542 624
- WO-A-93/16279
- FR-A- 2 651 021
- FR-A- 2 704 907
- US-A- 3 831 376
- US-A- 4 005 836
- US-A- 5 243 817

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autre cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur, l'ensemble constitué par la paroi extérieure de la nacelle

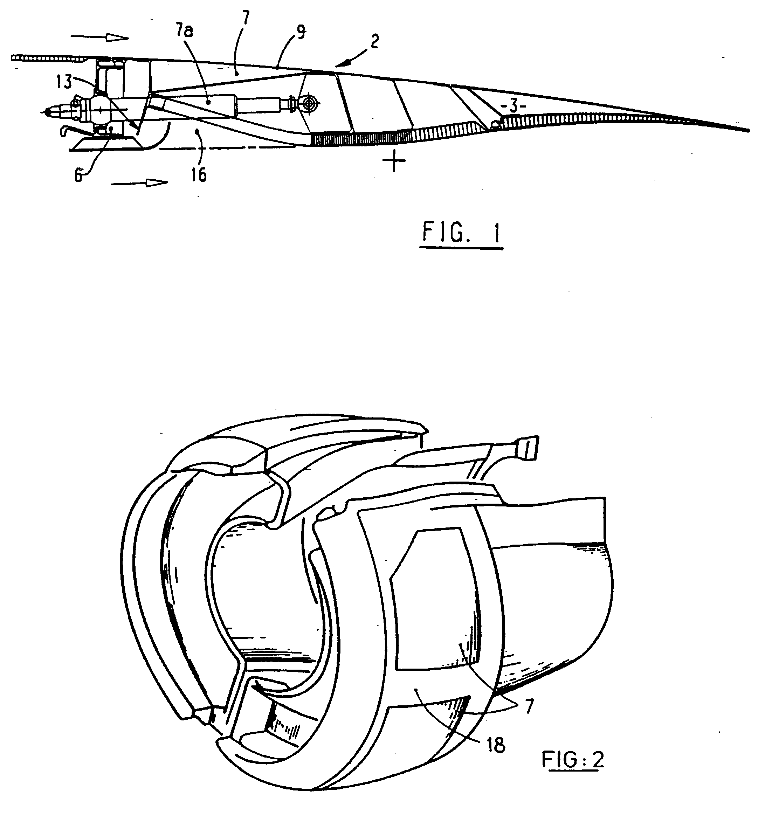

La figure 1 des dessins joints montre un exemple connu de réalisation d'un inverseur de poussée de ce type, appliqué comme le montre la vue schématique partielle en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres 18 qui relient la partie aval 3 du capotage extérieur à la partie amont 1 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 7a.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1.482.538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 16 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547

Le type d'inverseur de poussée décrit ci-dessus a l'inconvénient majeur que, pour des raisons imposées par des contraintes de dimensionnement aérodynamique du passage du flux dans les passages dégagés par la partie amont de ces portes, la pression du conduit exerce sur ces portes une action qui tend à les ouvrir. En effet, la section totale de ces passages doit être supérieure à la section du conduit dans un plan situé en amont des portes, ceci à cause des pertes en charge engendrées par la déviation du flux et ceci dans le cas où la section de fuite, constituée dans la partie aval du conduit non obstruée par la partie aval des portes, est minimisée de façon à obtenir une contre poussée convenable.

L'inconvénient majeur décrit ci-dessus se traduit suivant les deux aspects suivants :
- le fait que les portes tendent à s'ouvrir est un inconvénient du point de vue de la sécurité ; des portes sur lesquelles l'action de la pression tendrait à les maintenir fermées ou non déployées rendraient le dispositif plus sur, de même que des portes sur lesquelles l'action de la pression tendrait à les refermer lorsque celles-ci sont dans une position telle que la poussée n'est pas encore inversée, même si elle est partiellement supprimée ;
- l'action de la pression sur les portes est dans certains exemples connus telle que, dans certains cas à prendre en compte dans le dimensionnement de l'inverseur, des efforts très importants transitent dans les vérins entre leurs points d'attache sur la partie amont de la structure fixe et sur les portes ; il en résulte une masse importante de la structure, du système de commande des portes et de verrouillage de celles-ci, et des portes elles-mêmes.

Un des buts de l'invention est de proposer un moyen qui permet d'accroître la sécurité et/ou de réduire la masse de ce type d'inverseur.

On connaît en outre par EP-A-0 542 624 un inverseur de poussée du type précité dans lequel chaque porte est associée à un panneau articulé ayant une paroi interne prolongeant, lors d'un fonctionnement en jet direct l'extrémité aval de la paroi de partie intérieure de porte et étant en outre supporté par un pivot porté par la structure fixe d'inverseur et étant relié par un moyen mécanique articulé tel que bielle à ladite porte de manière que la composante des efforts générés par le flux de veine circulant dans le conduit lors du fonctionnement en jet direct appliquée sur la paroi du panneau amène à exercer sur la porte des efforts dans le sens de l'auto-fermeture tendant à maintenir la porte dans sa position non-déployée qui devient une position stable.

Ces buts sont atteints, conformément à l'invention par un inverseur de poussée du type précité répondant à ces conditions sans encourir les inconvénients des réalisations, connues antérieures, caractérisé en ce que le panneau articulé associé à chaque porte est entièrement disposé en aval de ladite porte dans un espace ménagé entre la porte et la structure fixe aval, ledit panneau ayant une paroi interne, lors d'un fonctionnement en jet direct, se raccordant à la paroi interne de ladite structure fixe aval, dont la paroi extérieure se raccorde à la paroi de partie extérieure de porte et enveloppe l'espace où est logé ledit panneau aval.

D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermées, d'un type connu et qui a fait précédemment l'objet d'une description ;
- la figure 2 représente une vue schématique en perspective d'un inverseur de poussée du type précité montré en position monté et avec les portes fermées ;
- la figure 3 représente, dans une vue analogue à celle de la figure 1 un inverseur de poussée à portes pivotantes, en position jet direct, selon un mode de réalisation de l'invention ;
- la figure 4 représente, dans une vue schématique analogue à celle des figures 1 et 3, l'inverseur de poussée conforme à l'invention dans une position d'inversion de poussée, montrant la position des portes et panneau aval ;
- les figures 5 et 6 représentent une autre façon d'installer le panneau aval par rapport à la porte ;
- les figures 7, 8 montrent des exemples de forme du panneau aval ;
- la figure 9 montre une disposition de charnière pour le panneau aval ;
- la figure 10 représente une vue du panneau représenté sur la figure 9, selon une coupe suivant la ligne X-X de la figure 9 ;
- La figure 11 montre selon une vue schématique analogue à celles des figures 3 et 5 une variante de mise en place du panneau aval, le plan de coupe passant par l'axe de charnière ;
- la figure 12 représente dans une vue schématique analogue à celles des figures 3 et 5 un inverseur de poussée selon une variante de réalisation de l'invention ;
- la figure 13 représente, dans une vue schématique analogue à celle des figures 4 et 6 l'inverseur de poussée représenté sur la figure 12 dans une position d'inversion de poussée

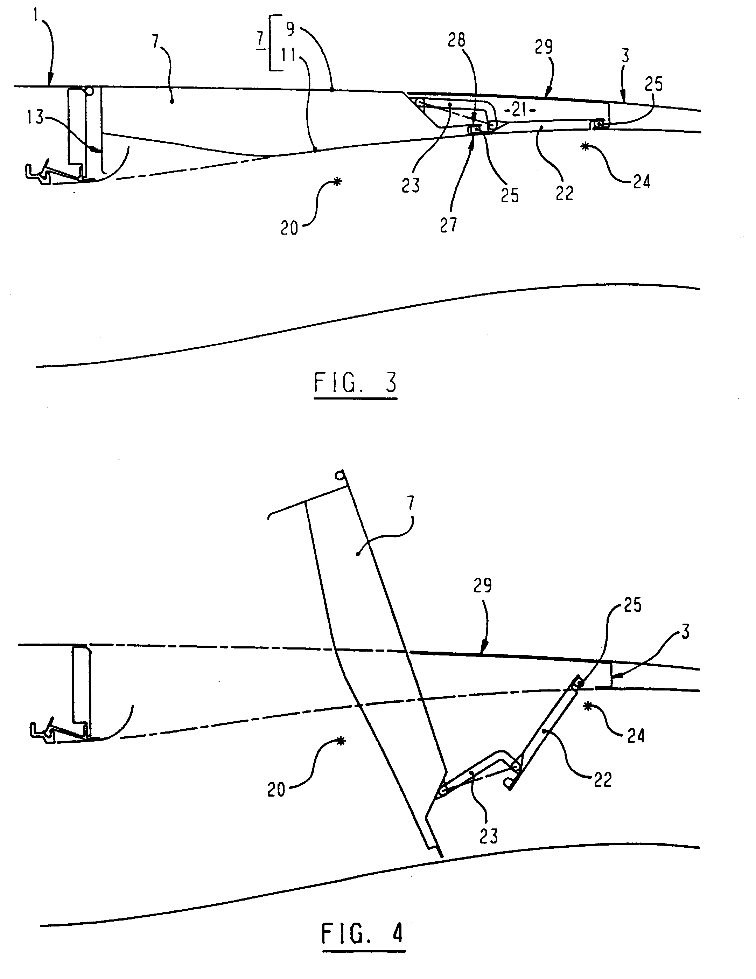

Selon un mode de réalisation de l'invention représenté sur les figures 3 et 4, un inverseur de poussée susceptible d'effectuer dans les phases de vol pertinentes d'un avion une inversion de flux du turboréacteur associé comporte, comme précédemment décrit dans un exemple connu de réalisation, en référence aux figures 1 et 2, une partie fixe amont 1, une partie fixe aval 3, reliées par des poutres 18 et une partie mobile 2 constituée par des portes 7 composées d'une partie extérieure 9 et d'une partie intérieure 11. On retrouve également le becquet 13 dans la partie amont des portes 7 ainsi que les pivots latéraux 20 de porte portés par les poutres fixes 18.

De manière remarquable et conforme à l'invention, un espace 21 est ménagé entre le bord aval de chaque porte 7 et la structure fixe aval 3. La continuité aérodynamique de la paroi extérieure du conduit de circulation du flux en jet direct, dans la configuration représentée sur la figure 3, est rétablie au moyen d'un panneau aval 22, disposé entre ledit bord aval de la porte 7 et la structure fixe aval 3. Le panneau 22 est relié à la porte 7 par un moyen mécanique articulé tel qu'une bielle 23. La bielle 23 peut être placée dans l'axe de symétrie de la porte ou dans une position décalée par rapport à cet axe et plusieurs bielles peuvent être utilisées. Le panneau 22 est monté pivotant autour d'un pivot 24 porté par la structure fixe d'inverseur, soit par les poutres 18, soit par la partie aval 3 de structure fixe. Des joints 25 disposés au bord amont et au bord aval du panneau 22 réalisent l'étanchéité en jet direct respectivement avec la paroi interne de la porte 7 et avec la paroi interne de la structure fixe aval 3.

Lors du passage en position d'inversion de poussée, représentée sur la figure 4, le déplacement du panneau aval 22 suit celui de la porte 7 qui entraîne le panneau 22 par l'intermédiaire de la bielle 23, le déplacement du panneau aval 22 se faisant par pivotement autour du pivot 24 tandis que la porte 7 pivote autour des pivots 20.

Un réglage de mise au point peut être prévu pour permettre l'ajustement de la bielle 23 de manière à assurer un lissage de veine optimal en jet direct.

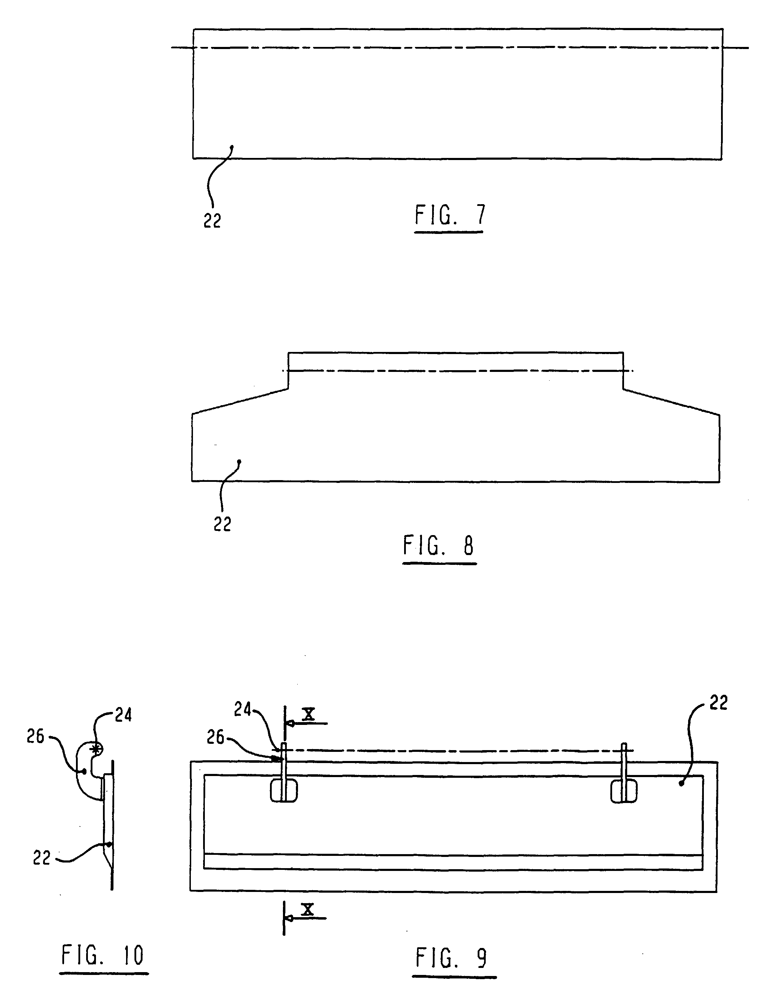

Lorsque le pivot 24 du panneau aval 22 est porté par les poutres longitudinales 18 de la structure fixe, le panneau 22 a une forme rectangulaire comme montrée sur la figure 7 et lorsque le pivot 24 est porté par la partie aval 3 de structure fixe, une forme polygonale de panneau comme montrée sur la figure 8 est mieux adaptée et facilite une meilleure cinématique de l'ensemble. Des découpes amont et/ou aval évolutives peuvent être adoptées pour les panneaux 22 de manière à s'adapter à la cinématique retenue et à s'associer aux autres éléments de structure.

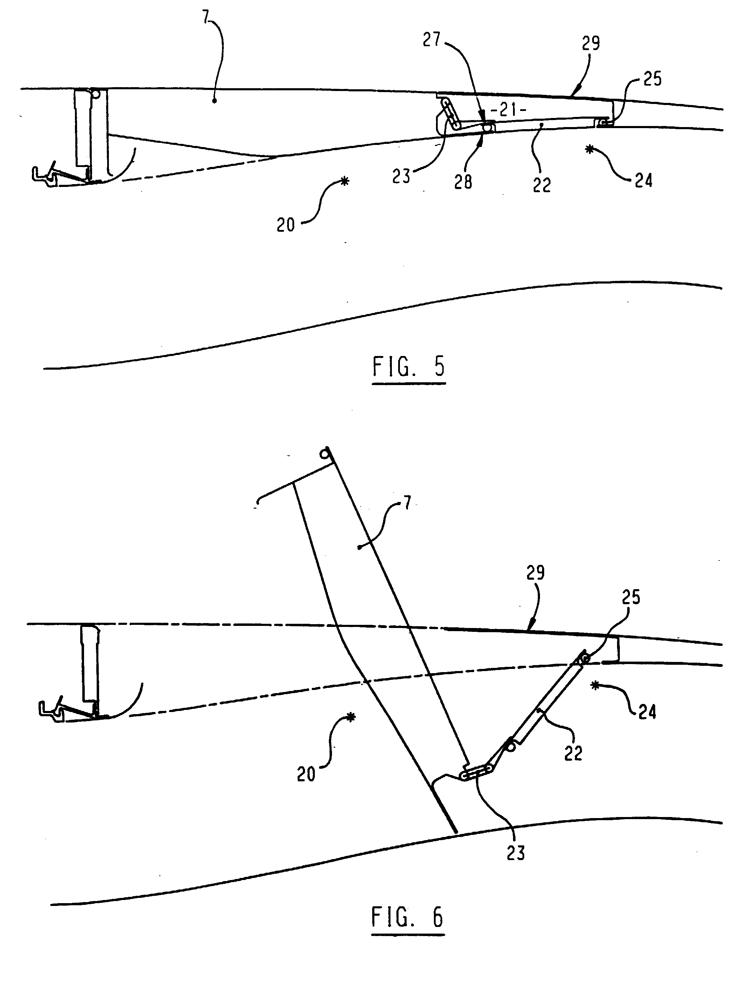

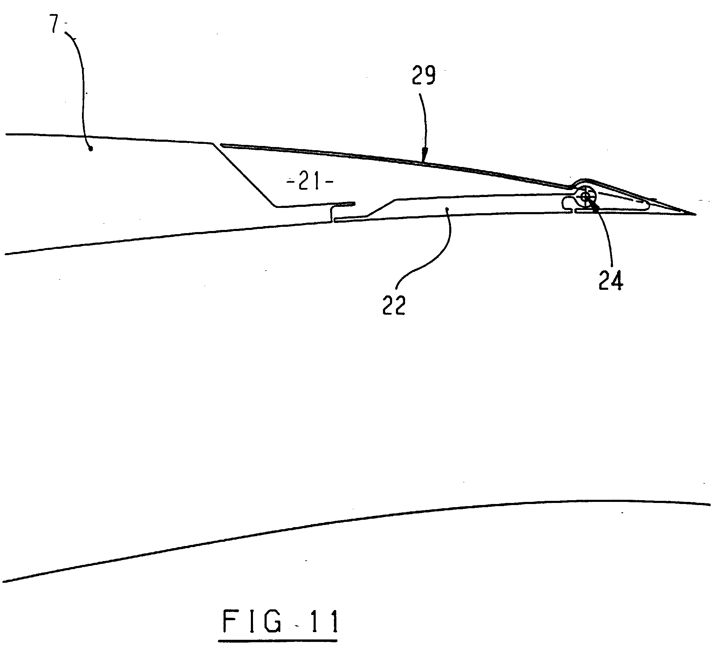

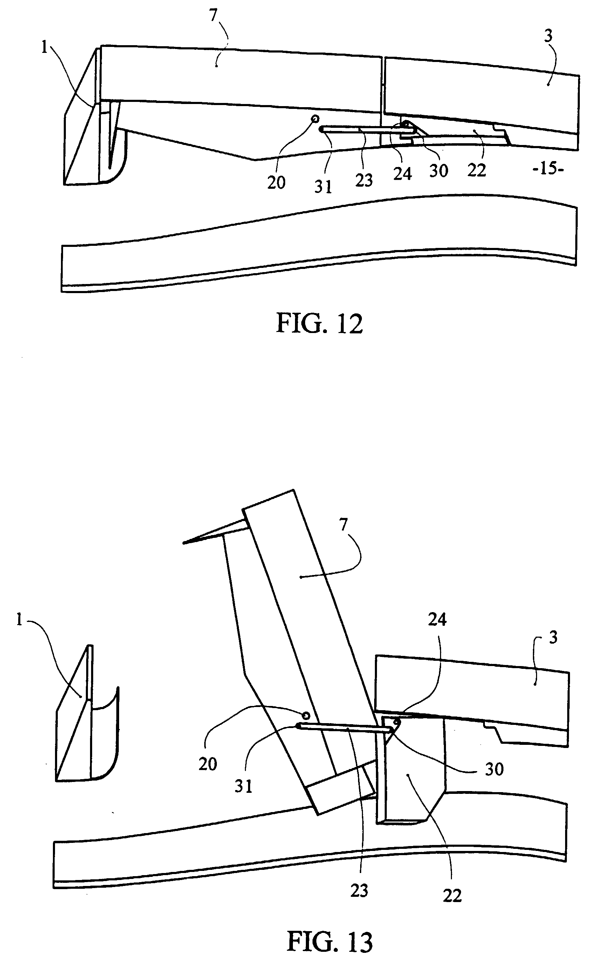

Par rapport à son axe de pivotement en 24, le panneau aval 22 comprend deux zones : une zone amont de longueur définie et une zone aval pour laquelle une longueur minimale est recherchée. La variante de réalisation représentée sur la figure 11, montre un exemple d'application dans un cas de nacelle courte où l'installation des éléments de pivot 24 du panneau 22 est effectuée à l'extrémité aval dudit panneau sur une excroissance locale de la ligne externe de nacelle ou de la paroi externe de veine du conduit annulaire. Dans certaines applications, ces excroissances de logement des éléments de pivot 24 peuvent venir en débordement aval de la structure fixe aval. Les figures 9 et 10 montrent un autre exemple de réalisation de charnière 26 associée au pivot 24 du panneau aval 22 où toute la longueur du panneau 22 est située dans une zone amont par rapport au pivot 24. Le joint d'étanchéité 25 peut suivant les modalités particulières de réalisation connues en soi être installé sur le panneau aval 22 ou bien être solidarisé d'une part avec la porte 7 et d'autre part, avec la structure fixe aval 3.
Suivant le mode de réalisation représenté sur les figures 3 et 4, une zone amont 27 du panneau aval 22 recouvre la partie aval 28 de la porte 7. La variante de réalisation représentée sur les figures 5 et 6 montre au contraire le recouvrement d'une zone amont 27 du panneau aval 22 par la partie aval 28 de la porte 7.
Selon une variante de réalisation représentée sur les figures 12 et 13, le pivot 24 solidaire de la structure fixe aval 3 est placé du côté amont du panneau aval. Dans ce cas, pour passer à la position d'inversion de poussée représentée sur la figure 13, l'arrière du panneau aval 22 plonge dans le canal annulaire 15. Comme précédemment, le panneau aval 22 est relié à la porte 7 par une bielle 23 accrochée en 30 au panneau aval 22 et en 31 à la porte 7. Ledit point d'accrochage 31 peut être placé en partie latérale de la porte 7 ou bien se trouver dans une zone intermédiaire comprise entre l'axe médian de la porte 7 et la partie latérale de la porte 7. Deux ensembles d'entraînement du panneau aval 22 comportant chacun une bielle 23 sont utilisés dans ce cas. Le pivot 24 et le point d'accrochage 30 de la bielle 23 peuvent avantageusement être associés sur la même ferrure du panneau aval 22. Dans l'exemple de réalisation représenté sur les figures 12 et 13, les points d'accrochage 30 et 31 de la bielle 23 sont placés en position radialement interne par rapport aux pivots 20 de porte et 24 de panneau aval mais en fonction des applications particulières, cette position peut être inversée respectivement pour chaque pivot. Dans cette variante de réalisation également, la longueur de la zone de porte 7 située en aval du pivot 20 peut être réduite et la longueur du panneau aval 22 associé peut être augmentée de manière correspondante de façon qu'en position d'inversion, l'action du flux circulant dans le canal annulaire 15, venant au contact de la porte 7 et du panneau aval 22 rend l'ensemble constitué par la porte 7 et le panneau aval 22 auto-refermant, l'angle de débattement du panneau aval 22 étant adapté pour répondre aux besoins aérodynamiques recherchés.
Quel que soit le mode de réalisation et comme cela est visible sur les figures 3, 4, 5, 6, 11 et 12, dans tous les cas, l'espace 21 où est logé le panneau aval 22 est enveloppé par une paroi extérieure 29 appartenant à la structure fixe aval 3 d'inverseur et qui se raccorde en position de jet direct à la paroi de partie extérieure 9 de la porte 7.

Dans tous les cas et de manière remarquable, conforme à l'invention, la position des pivots 20 de la porte 7 et des pivots 24 du panneau aval 22 est déterminé de manière que, en position de jet direct, l'action du flux circulant dans le conduit annulaire génère des efforts s'exerçant de manière prépondérante sur la zone interne aval de la porte 7 et sur la zone amont du panneau aval 22 tels que la position non déployée de l'ensemble porte 7 et panneau aval 22 associé devient une position stable et la résultante des efforts s'exerçant sur la zone interne aval de la porte 7 et sur la zone amont du panneau aval 22 tels que la position non déployée de l'ensemble porte 7 et panneau aval 22 associé devient une position stable et la résultante des efforts s'exerçant sur ledit ensemble est dirigée dans le sens de l'auto-fermeture. On note en outre que l'avantage important de l'invention qui vient d'être relevé n'est pas obtenu au détriment d'un accroissement de masse qui serait dû notamment au système d'entraînement de la porte 7 et au renforcement du vérin 7a de commande et des supports associés. En effet, dès que l'ouverture est amorcée, les joints 25 du panneau aval 22 ne remplissent plus plus leur fonction d'étanchéité et dès que la porte 7 atteint un angle déterminé d'ouverture, la pression du flux circulant à l'intérieur du conduit annulaire ne s'exerce plus que sur la paroi interne de la porte 7 car aucune action ne s'exerce plus sur la paroi interne du panneau aval 22. Ainsi, en position de jet direct, aucune sollicitation ne s'exerce sur le système de commande des déplacements de la porte 7 et lors de la phase d'ouverture, le système n'a qu'une fonction de retenue, ce qui permet une réduction de la structure et une réduction de masse.

Les dispositions retenues par l'invention entraînent également que la pression du flux dévié ne s'exerce pas sur le panneau aval 22 en position d'inversion et en conséquence une structure légère peut être adoptée pour le panneau 22.

L'invention permet également sur la base d'une définition géométrique donnée de l'inverseur d'adapter le fonctionnement de l'inverseur en faisant varier l'angle d'ouverture de la porte 7 en vue d'affiner ou d'améliorer les performances en fonctionnement d'inversion. Notamment, des variations de longueur peuvent être apportées sur les zones d'extrémité aval de la porte 7 et d'extrémité amont du panneau aval 22 sans affecter les résultats aérodynamiques en fonctionnement de jet direct.

Le panneau aval 22 peut être de la même largeur que la porte 7 et il est également possible de prévoir un panneau aval 22 de largeur réduite. Le panneau aval 22 est généralement réalisé en une seule partie mais il peut également être réalisé en deux ou plusieurs parties, notamment en prévoyant dans ce cas un recouvrement mutuel entre ces parties afin d'assurer l'étanchéité centrale.

On note également que les dispositions de l'invention sont applicables aussi bien en association avec des portes classiques d'inverseur de poussée qu'en les associant à d'autres dispositions particulières telles que l'utilisation d'un panneau mobile conforme aux dispositions décrites par US 3.605.411 ou un panneau amont selon FR-A-2.651.021 ou un autre système de lissage du profil aérodynamique de veine.

## Revendications

1. Inverseur de poussée de turboréacteur à double flux comportant des portes pivotantes (7) susceptibles, en position fermée, lors d'un fonctionnement en jet direct, de s'intégrer dans la paroi extérieure du conduit de flux en arrière de la soufflante de turboréacteur, étant constituées d'une partie extérieure (9) et d'une partie intérieure (11) et étant en outre susceptibles chacune de pivoter autour de pivots (20) portés par la structure fixe de l'inverseur sous l'action d'un moyen de commande des déplacements tel qu'un vérin (7a) de manière à constituer des obstacles de déviation de flux lors d'un fonctionnement en inversion de poussée, chaque porte (7) d'inverseur étant associée à un panneau articulé (22), ledit panneau (22) ayant une paroi interne prolongeant, lors d'un fonctionnement en jet direct, l'extrémité aval de la paroi de partie intérieure (11) de porte et étant en outre supporté par un pivot (24) porté par la structure fixe d'inverseur et étant relié par un moyen mécanique articulé tel que bielle (23) à ladite porte (7) de manière que la composante des efforts générés par le flux de veine circulant dans le conduit lors du fonctionnement en jet direct appliquée sur la paroi dudit panneau (22) amène à exercer sur la porte (7) des efforts dans le sens de l'auto-fermeture tendant à maintenir la porte (7) dans sa position non-déployée qui devient une position stable, caractérisé en ce que ledit panneau articulé (22) est entièrement disposé en aval de ladite porte (7), dans un espace (21) ménagé entre la porte (7) et la structure fixe aval (3), ladite paroi interne du panneau (22) se raccordant à la paroi interne de ladite structure fixe aval (3) dont la paroi extérieure (29) se raccorde à la paroi de partie extérieure (9) de porte et enveloppe l'espace (21) où est logé ledit panneau aval (22).

2. Inverseur de poussée de turboréacteur selon la revendication 1 dans lequel des joints d'étanchéité (25) sont disposés dans la position du fonctionnement en jet direct, entre ledit panneau aval (22) et la structure fixe aval (3) d'une part et, entre ledit panneau aval (22) et le bord aval de porte (7), d'autre part.

3. Inverseur de poussée de turboréacteur selon l'une des revendications 1 ou 2, dans lequel le pivot (24) du panneau aval (22) est porté par des poutres (18) longitudinales appartenant à la structure fixe d'inverseur.

4. Inverseur de poussée de turboréacteur selon l'une des revendications 1 ou 2, dans lequel le pivot (24) du panneau aval est porté par la partie aval (3) de structure fixe de l'inverseur.

5. Inverseur de poussée de turboréacteur selon la revendication 4 dans lequel les éléments de pivot (24) sont logés dans une excroissance locale de la paroi externe de veine du conduit annulaire.

6. Inverseur de poussée de turboréacteur selon l'une des revendications 1 ou 2 dans lequel les éléments de pivot (24) sont logés dans une excroissance locale de la ligne externe de nacelle.

7. Inverseur de poussée de turboréacteur selon l'une des revendications 5 ou 6 dans lequel les éléments de pivot (24) sont logés dans une excroissance locale de la ligne externe de nacelle ou de la paroi externe de veine du conduit annulaire.

8. inverseur de poussée de turboréacteur selon la revendication 7 dans lequel lesdites excroissances viennent en débordement aval de la structure fixe aval.

9. Inverseur de poussée de turboréacteur selon l'une quelconque des revendications 1 à 8 dans lequel chaque panneau aval (22) est de la même largeur que la porte associée (7).

10. Inverseur de poussée de turboréacteur selon l'une quelconque des revendications 1 à 8 dans lequel chaque panneau aval (22) est de largeur différente de celle de la porte associée (7).

11. Inverseur de poussée de turboréacteur selon l'une quelconque des revendications 1 à 10 dans lequel chaque panneau aval (22) est réalisé en une seule partie.

12. Inverseur de poussée de turboréacteur selon l'une quelconque des revendications 1 à 10 dans lequel chaque panneau aval (22) est réalisé en plusieurs parties.

13. Inverseur de poussée de turboréacteur selon la revendication 4 dans lequel le pivot (24) porté par la partie aval (3) de structure fixe de l'inverseur est placé du côté amont du panneau aval (22).

14. Inverseur de poussée de turboréacteur selon la revendication 13 dans lequel le panneau aval (22) est relié à la porte (7) par deux bielles (23) dont un point d'accrochage (31) est respectivement placé en partie latérale de la porte (7).

## Claims

1. A thrust reverser of a bypass turbojet engine comprising pivoting doors (7) adapted when in the closed position in forward thrust operation to be incorporated in the outer wall of the flow path duct aft of the engine fan, the doors being constituted by an outer part (9) and an inner part (11), each door being pivotable around pivots (20) on the fixed structure of the reverser by actuating means, such as jacks (7a), so as to constitute flow-deflecting obstacles in reverse thrust operation, each door being associated with an articulated panel (22) having an inner wall which in forward thrust operation extends the downstream end of the inner door part (11), the said panel being supported by a pivot (24) on the fixed structure of the reverser and being so connected by an articulated mechanical means, such as a rod (23), to the door (7) that the component of the forces generated by the flow through the duct in forward thrust operation which is applied to the wall of the panel (22) exerts on the door (7) self-closing forces tending to maintain the door (7) in its undeployed position which becomes a stable position, characterised in that the whole of the articulated panel (22) is disposed downstream of the door (7) in a gap (21) between the door (7) and the fixed downstream structure (3), the said panel inner wall being flush with the inner wall of the downstream fixed structure (3) whose outer wall (29) is flush with the wall (9) of the outer door part and envelops the gap (21) in which the downstream panel (22) is received.

2. A thrust reverser according to claim 1 wherein in forward thrust operation seals (25) are disposed between the downstream panel (22) and the fixed downstream structure (3) and between the downstream panel (22) and the downstream edge of the door (7).

3. A thrust reverser according to claim 1 or claim 2 wherein the pivot (24) of the downstream panel (22) is carried by longitudinal members (18) belonging to the fixed structure of the reverser.

4. A thrust reverser according to claim 1 or claim 2 wherein the pivot (24) of the downstream panel (22) is carried by the downstream part of the fixed structure (3) of the reverser.

5. A thrust reverser according to claim 4 wherein the pivot elements (24) are received in a local bulge in the outer flowpath wall of the annular duct.

6. A thrust reverser according to claim 1 or claim 2 wherein the pivot elements (24) are received in a local bulge of the outer line of the nacelle..

7. A thrust reverser according to claim 5 or claim 6 wherein the pivot elements (24) are received in a local bulge of the outer line of the nacelle or of the outer flowpath wall of the annular duct.

8. A thrust reverser according to claim 7 wherein the bulges project downstream of the fixed downstream structure,

9. A thrust reverser according to any of claims 1 to 8 wherein each downstream panel (22) is of the same width as the associated door (7).

10. A thrust reverser according to any of claims 1 to 8 wherein each downstream panel (22) is of a different width from the associated door (7).

11. A thrust reverser according to any of claims 1 to 10 wherein each downstream panel is a unitary member.

12. A thrust reverser according to any of claims 1 to 10 wherein each downstream panel (22) consists of a number of parts.

13. A thrust reverser according to claim 4 wherein the pivot (24) on the fixed downstream structure (3) is disposed on the upstream side of the downstream panel (22).

14. A thrust reverser according to claim 13 wherein the downstream panel (22) is connected to the door (7) by two rods (23) connected one to each lateral part of the door (7).

## Patentansprüche

1. Schubumkehrvorrichtung für ein Zweikreis-TL-Triebwerk mit Schwenkklappen (7), die sich bei Schließstellung im Direktstrahlbetrieb in die Außenwand des hinter dem Triebwerkgebläse angeordneten Stromkanals einfügen können, aus einem Außenteil (9) und einem Innenteil (11) bestehen und des weiteren jeweils um Drehachsen (20), die an dem Festaufban der Umkehrvorrichtung befestigt sind, unter Einwirkung eines Steuermittels für die Bewegungen, wie z. B. eines Zylinders (a), dergestalt schwenken können, daß sie bei einem Schubumkehrbetrieb Stromumlenkhindernisse bilden, wobei jede Schubumkehr-Klappe (7) mit einer Gelenkplatte (22) verbunden ist, deren Innenwand im Direktstrahlbetrieb das hintere Ende der Wand des Klappeninnenteils (11) verlängert und ferner an einem Drehzapfen (24) sitzt, der an dem Festaufbau der Umkehrvorrichtung befestigt ist, und durch ein angelenktes mechanisches Mittel wie z. B. eine Stange (23) mit dieser Klappe (7) dergestalt verbunden ist, daß die auf die Wand dieser Platte (22) wirkende Komponente der durch den Strom in dem Kanal bei Direktstrahlbetrieb erzeugten Kräfte dazu führt, daß auf die Klappe (7) Kräfte in der Richtung des Selbst-Schließens wirken, wodurch die Tendenz besteht, daß die Klappe (7) in ihrer nicht ausgeklappten Stellung gehalten wird, die eine stabile Stellung wird,
**dadurch gekennzeichnet, daß** die genannte Gelenkplatte (22) gänzlich hinter dieser Klappe (7) in einem Zwischenraum (21) angeordnet ist, der zwischen der Klappe (7) und dem hinteren Festaufbau (3) vorgesehen ist, wobei sich die genannte Innenwand der Platte (22) an die Innenwand dieses hinteren Festaufbaus (3) anschließt, dessen Außenwand (29) sich an die Wand des Klappenaußenteils (9) anschließt und den Zwischenraum (21) umgibt, in dem die genannte hintere Platte (22) Aufnahme findet.

2. Schubumkehrvorrichtung für ein TL-Triebwerk nach Anspruch 1, bei der in Direktstrahlbetrieb-Stellung Dichtungen (25) einerseits zwischen dieser hinteren Platte (22) und dem hinteren Festaufbau (3) und andererseits zwischen dieser hinteren Platte (22) und der Hinterkante der Klappe (7) angeordnet sind.

3. Schubumkehrvorrichtung für ein TL-Triebwerk nach einem der Ansprüche 1 oder 2, bei der der Drehzapfen (24) der hinteren Platte (22) an Längsstreben (18) sitzt, die Teil des Festaufbaus der Umkehrvorrichtung sind.

4. Schubumkehrvorrichtung für ein TL-Triebwerk nach einem der Ansprüche 1 oder 2, bei der der Drehzapfen (24) der hinteren Platte (22) an dem hinteren Teil (3) des Festaufbaus der Umkehrvorrichtung sitzt.

5. Schubumkehrvorrichtung für ein TL-Triebwerk nach Anspruch 4, bei der die Drehzapfenteile (24) in einer lokalen Protuberanz der Außenwand des Ringkanals gelagert sind.

6. Schubumkehrvorrichtung für ein TL-Triebwerk nach einem der Ansprüche 1 oder 2, bei der die Drehzapfenteile (24) in einer lokalen Protuberanz der Außenlinie des Triebwerksrumpfs gelagert sind.

7. Schubumkehrvorrichtung für ein TL-Triebwerk nach einem der Ansprüche 5 oder 6, bei der die Drehzapfenteile (24) in einer lokalen Protuberanz der Außenlinie des Triebwerksrumpfs oder der Außenwand des Ringkanals gelagert sind.

8. Schubumkehrvorrichtung für ein TL-Triebwerk nach Anspruch 7, bei der die genannten Protuberanzen nach hinten über den hinteren Festaufbau hinausragen.

9. Schubumkehrvorrichtung für ein TL-Triebwerk nach einem der Ansprüche 1 bis 8, bei der jede hintere Platte (22) die gleiche Breite hat wie die damit verbundene Klappe (7).

10. Schubumkehrvorrichtung für ein TL-Triebwerk nach einem der Ansprüche 1 bis 8, bei der jede hintere Platte (22) eine andere Breite hat als die damit verbundene Klappe (7).

11. Schubumkehrvorrichtung für eine TL-Triebwerk nach einem der Ansprüche 1 bis 10, bei der jede hintere Platte (22) aus einem einzigen Teil besteht.

12. Schubumkehrvorrichtung für ein TL-Triebwerk nach einem der Ansprüche 1 bis 10, bei der jede hintere Platte (22) aus mehreren Teilen besteht.

13. Schubumkehrvorrichtung für ein TL-Triebwerk nach Anspruch 4, bei der der an dem hinteren Teil (3) des Festaufbaus der Umkehrvorrichtung sitzende Drehzapfen (24) vor der hinteren Platte (22) angeordnet ist.

14. Schubumkehrvorrichtung für ein TL-Triebwerk nach Anspruch 13, bei der die hintere Platte (22) mit der Klappe (7) durch zwei Stangen (23) verbunden ist, von denen jeweils eine Befestigungsstelle (31) seitlich der Klappe (7) angeordnet ist.
